# EUROPEAN PATENT SPECIFICATION

(11) **EP 0 530 906 B1**
(45) Date of publication and mention of the grant of the patent: **15.01.1997**
(21) Application number: 92202623.2
(22) Date of filing: 28.08.1992
(51) Int. Cl.: C08B 30/10, A23L 3/34

(54) **A method for preserving and storing protein containing potato juice**
Verfahren zum Aufbewahren und Lagerung von Kartoffelsaft, welcher Protein enthält
Procédé pour conserver et stocker du jus de pommes de terre contenant des protéines

(30) Priority: 29.08.1991 NL 9101463
(43) Date of publication of application: 10.03.1993
(73) Proprietor: Coöperatieve Verkoop- en Productievereniging van Aardappelmeel en Derivaten 'AVEBE' B.A., NL-9641 JA Veendam (NL)
(72) Inventor: De Vries, Johannes, NL-9481 GE Vries (NL); Heynen, Guillaume Joseph Marie Antoinne, NL-7876 AN Valthermond (NL)
(74) Representative: Smulders, Theodorus A.H.J., Ir.

(56) References cited:
- CA-A- 1 105 159
- DE-C- 34 313
- GB-A- 2 087 724
- CHEMICAL ABSTRACTS, vol. 90, no. 3, 15 January 1979, Columbus, Ohio, US; abstract no. 21062v, OBLEZOVA T. P. ET AL: "Use of sulfur dioxide for preserving the cellular juice of potatoes" page 489; & SAKH. PROM-ST. 1978, (11), 63-6
- PATENT ABSTRACTS OF JAPAN vol. 13, no. 119 (C-579)(3467) 23 March 1989; & JP-A-63 291 685 ( TOMIYA SATOU )
- CHEMICAL ABSTRACTS, vol. 84, no. 13, 29 March 1976, Columbus, Ohio, US; abstract no. 87984e, SROCZYNSKI A. ET AL: " Purification of waste potato juice" page 368; & PL-B-76891

## Description

The invention relates to a method for preserving and storing liquids containing biologically degradable compounds, more in particular protein-containing potato juice. Such liquids are subject to microbiological decomposition leading to unacceptable emission of odour components and/or toxic gases.

In many cases it is desirable to store liquids containing biologically degradable compounds for a prolonged time before further processing these liquids. This enables spreading the further processing over a longer period of time. This is for instance the case in the industrial treatment of agricultural and horticultural products such as potatoes, sugarbeets, vegetables and fruit. The processing of these products is mostly seasonal, viz. in the last months of the year. This leads to the production of liquid streams containing biologically degradable compounds. On account of the seasonal character of these industries, a treatment plant which can process the entire waste water stream directly would be practically idle for the greater part of the year. However, if a part of the liquid stream can simply be stored temporarily, a relatively small treatment plant which can be used over the greater part of the year will be sufficient.

Normally, these liquids were temporarily stored in dug lagoons. Current regulations no longer allow this because infiltration of polluted liquids into the bottom and the emission of odour components and/or toxic gases into the air is no longer accepted. However, the wish remains to temporarily store the liquid streams to enable them to be further processed more gradually over a greater period of the year. This in turn permits smaller treatment plants to be used whilst also the costs for personnel and maintenance decrease.

The object of the invention is to provide a method for preserving and storing protein-containing potato juice without this leading to unacceptable emission of odour components and/or toxic gases. According to the invention, protein-containing potato juice is preserved and stored by adjusting the pH thereof below 4 and preferably below 3.5 using nitric acid.

It is known to preserve biologically degradable liquids by lowering the pH with the acids lactic acid, hydrochloric acid, phosphoric acid and sulphuric acid. Chemical Abstracts, Vol. 90, 1979, page 489, 21062V, teaches the preservation and storage of potato juice by introducing SO₂ therein. According to an article by M. Baczkowicz and P. Tomasik in Starch/Stärke, 1985, pp 241-248, potato juice is heated to such an extent that the coagulable potato proteins precipitate, whereafter the precipitate is separated. The remaining liquid (designated "decoagulated juice") can be preserved by acidifying with sulphuric acid. After acidification to pH 3, after 4 months' storage grown mold develops.

The use of the known methods mostly leads to certain objections with respect to the cost and/or the limited storage time and/or problems in the further processing of the stored liquids in biological treatment plants or when used as fertilizer in agriculture.

According to the invention, protein-containing potato juice is preserved and stored by lowering the pH by adding nitric acid. Preferably, using nitric acid, the pH is adjusted below 3.5. The method according to the invention is very suitable for preserving and storing potato juice such as is released in the processing of potatoes in a potato starch plant. In that case, the nitric acid can be added virtually directly after the separation of the potato juice, without requiring that the potato juice be heated and the coagulable proteins be separated. The acidified potato juice can be stored in large open storage basins. The invention thus enables proper preservation without any problems for periods in excess of 4 months.

The use of nitric acid for preserving and storing protein-containing potato juice has advantages over the use of other acids. Surprisingly, it has been found that the nitrate ion has an additional preservative effect. At equal pH of the liquid to be preserved, nitric acid has a better preservative activity than hydrochloric acid. Consequently, if nitric acid is used, the potato juice can be preserved longer than in the case of hydrochloric acid, without this leading to unacceptable emission of odour components and/or toxic gases.

After the preserved potato juice has been stored, it is processed further. An important option is further processing in a biological treatment plant. The nitrate ions (NO₃⁻) added in accordance with the invention can be partly converted through denitrification in a biological acidification reactor, whereby *inter alia* hydroxyl ions are released so that less lye is required when the potato juice is neutralised later on.

Research has shown that in the biological acidification reactor, at an influent pH of 3.3, the acidification and denitrification of preserved potato juice are started off properly. Also, a positive effect was found at a dosage of 0.01-0.1 mg/l Cu and molybdate. Under these conditions the input concentration of 2-2.5 g/l NO₃⁻ appeared to be reduced to 0-325 mg/l NO₃⁻ (nitrate) in the effluent, with additionally 0-100 mg/l NO₂⁻ (nitrite) in the effluent. The effluent obtained from the acidification reactor is subsequently fed to a so-called anaerobic upflow reactor (methane reactor) in which the biological synthesis of methane takes place.

Another option in further processing the potato juice as preserved in accordance with the invention after it has been stored is to use it as fertilizer in agriculture.

The method according to the invention will be further explained in and by the following example.

### Example

The following tests relate to the preservation and storage of potato juice by means of acidification to a lower pH. The potato juice comes from a potato starch plant and is obtained by isolation from grated potatoes. The potato juice has a pH of 5.7. The preservation is effected by acidifying the potato juice with hydrochloric acid (0.113 N) or nitric acid (0.126 N) to pH 3.0. The storage tests were carried out in vessels at 20°C.

Storage tests have shown there is a fairly good relationship between the ammonium content (NH₄⁺-N) of the potato juice stored and the odour threshold measured in the air. Below 400 mg/l NH₄⁺-N in the potato juice stored no unacceptable stench arises.

In the Table below, the course of the pH and of the NH₄⁺-N content of the potato juice stored is shown. The storage time is specified in weeks. An increase in the pH value is a sign that in the liquid stored undesirable reactions occur.

| | hydrochloric pH 3 acid; | | nitric acid; pH 3 | |
|---|---|---|---|---|
| Storage time in weeks | pH | NH₄⁺-N mg/l | pH | NH₄⁺-N mg/l |
| 0 | 3.0 | 180 | 3.0 | 160 |
| 1 | 3.0 | 250 | 2.8 | 190 |
| 5 | 3.2 | 265 | 3.0 | 195 |
| 10 | 4.5 | 885 | 2.9 | 135 |
| 12 | 6.2 | 1425 | 2.9 | 215 |
| 13 | 6.2 | 1430 | 2.9 | - |
| 15 | | | 2.9 | 160 |
| 20 | | | 3.0 | 130 |

The Table shows that the preservation with nitric acid yields much better results than the preservation with hydrochloric acid. If hydrochloric acid is used, after 10 weeks' storage the pH exceeds 4 and the ammonium content of the potato juice becomes so high that unacceptable stench is produced. If nitric acid is used, after 20 weeks' storage, the pH is substantially unchanged and the ammonium content has remained low. All this points to a good preservation without unacceptable stench production.

## Claims

1. A method for preserving and storing protein-containing potato juice, characterized in that the pH of the potato juice is adjusted below 4 using nitric acid.

2. A method according to claim 1, characterized in that the pH is adjusted below 3.5.

## Patentansprüche

1. Ein Verfahren zur Konservierung und Lagerung von Protein enthaltendem Kartoffelsaft, **dadurch gekennzeichnet**, daß der pH-Wert des Kartoffelsafts unter Verwendung von Salpetersäure auf unter 4 eingestellt ist.

2. Verfahren nach Anspruch 1, **dadurch gekennzeichnet**, daß der pH-Wert auf unter 3,5 eingestellt ist.

## Revendications

1. Procédé pour conserver et stocker du jus de pommes de terre contenant des protéines, caractérisé en ce que le pH du jus de pommes de terre est amené au-dessous de 4 à l'aide d'acide nitrique.

2. Procédé selon la revendication 1, caractérisé en ce que le pH est amené au-dessous de 3,5.
